(19) Europäisches Patentamt
European Patent Office
Office européen des brevets

(11) **EP 3 768 414 B1**

(12) **EUROPÄISCHE PATENTSCHRIFT**

(45) Veröffentlichungstag und Bekanntmachung des Hinweises auf die Patenterteilung:
**02.03.2022 Patentblatt 2022/09**

(21) Anmeldenummer: **19711389.7**

(22) Anmeldetag: **22.03.2019**

(51) Internationale Patentklassifikation (IPC):
**B01F 7/00** *(2006.01)* **B01F 15/00** *(2006.01)*
**B01F 15/04** *(2006.01)*

(52) Gemeinsame Patentklassifikation (CPC):
**B01F 35/2112; B01F 35/2206; B01F 35/221422; B01F 35/881;** B01F 27/2312

(86) Internationale Anmeldenummer:
**PCT/EP2019/057277**

(87) Internationale Veröffentlichungsnummer:
**WO 2019/180225 (26.09.2019 Gazette 2019/39)**

(54) **HERSTELLUNG VON BESCHICHTUNGSMITTELZUSAMMENSETZUNGEN UNTER ANPASSUNG VON RÜHRWERKSPARAMETERN**

PRODUCTION OF COATING MEANS COMPOSITIONS WHILE ADAPTING AGITATOR PARAMETERS

FABRICATION DE COMPOSITIONS D'AGENT DE REVÊTEMENT EN AJUSTANT DES PARAMÈTRES D'AGITATEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.03.2018 EP 18163337**

(43) Veröffentlichungstag der Anmeldung:
**27.01.2021 Patentblatt 2021/04**

(73) Patentinhaber:
• **BASF Coatings GmbH**
  **48165 Münster (DE)**
• **Fricke Abfülltechnik GmbH & Co. KG**
  **32423 Minden (DE)**

(72) Erfinder:
• **BLASER, Alexander**
  **48165 Münster (DE)**
• **MARKMANN, Mario**
  **32584 Löhne (DE)**

(74) Vertreter: **BASF IP Association**
  **BASF SE**
  **GBI-C006**
  **67056 Ludwigshafen (DE)**

(56) Entgegenhaltungen:
EP-A1- 1 776 998    WO-A1-2013/098913
WO-A1-2013/098959    WO-A1-2017/091450
DE-A1-102009 044 205    DE-U1-202005 015 439

## Beschreibung

Die vorliegende Erfindung betrifft ein Verfahren zur Herstellung einer in der Automobilindustrie einsetzbaren Beschichtungsmittelzusammensetzung oder einer Vorstufe davon, wobei das Verfahren wenigstens den Schritt (1) umfasst, nämlich ein Einwiegen aller zur Herstellung der Beschichtungsmittelzusammensetzung oder der Vorstufe davon erforderlichen Komponenten unter Verwendung einer gravimetrischen Dosieranlage mittels wenigstens eines Dosierventils in einen für die Einwaage geeigneten Behälter, wobei die in den Behälter eingewogenen Komponenten während der Dauer der Durchführung von Schritt (1) mittels eines Rührwerks durchmischt werden und während der Durchführung von Schritt (1) eine kontinuierliche Anpassung der Drehzahl und/oder der Umfangsgeschwindigkeit des Rührwerks in Abhängigkeit von der durch die Durchmischung entstehenden Trombe innerhalb des Behälters erfolgt, wobei die Trombe optisch mittels einer Kamera erfasst wird.

## Stand der Technik

In der Automobilindustrie einsetzbare Beschichtungsmittelzusammensetzungen werden heutzutage im (groß)industriellem Maßstab unter Verwendung hierfür geeigneter Dosieranlagen hergestellt, die bisher üblicherweise jedoch nicht automatisiert sind.

Der Grund hierfür liegt in der Notwendigkeit der Zugabe der einzelnen Komponenten zur Herstellung von solchen Zusammensetzungen unter Rühren. Bei der Herstellung vieler solcher Beschichtungsmittelzusammensetzungen wie zum Beispiel von Wasserbasislacken ist ein kontinuierliches Durchmischen der zur Herstellung eingesetzten Komponenten aufgrund von auftretenden Viskositätsänderungen bei der Dosierung erforderlich, insbesondere dann, wenn sowohl hydrophile als auch hydrophobe Komponenten eingesetzt werden. Schlimmstenfalls kann es ansonsten zu einem Ausfallen einzelner Komponenten während der Zugabe kommen, beispielsweise bei der Zumischung einer hydrophilen Komponente zu einer hydrophoben Mischung. Eine kontinuierliche Durchmischung mittels Rühren ist deshalb nicht erst nach erfolgter Zugabe aller Komponenten erforderlich, sondern bereits zu jedem Zeitpunkt während ihrer Zugabe, um bei der Zugabe, also der Dosierung, das erforderliche Strömungsbild an der Oberfläche der resultierenden Mischung wie einer Flüssigkeit zu gewährleisten bzw. aufrechtzuerhalten. Dieses erforderliche Strömungsbild an der Oberfläche wird als Trombe beschrieben und ist in der Literatur und dem Fachmann auch unter dem Begriff des Donut-Effektes bekannt.

Industriellen Dosieranlagen zur Herstellung von Beschichtungsmittelzusammensetzungen liegt üblicherweise eine gravimetrische Arbeitsweise zugrunde, d.h. die Dosierung der Komponenten erfolgt über eine Gewichtsbestimmung der herzustellenden Zusammensetzung. Problematisch ist hierbei jedoch, dass üblicherweise im Fall einer solchen gravimetrischen Dosierung zumindest nicht über die gesamte Dauer der Zugabe der einzelnen Komponenten eine Durchmischung mittels Rühren möglich ist. Insbesondere ist während der gravimetrischen Feindosierung einzelner Komponenten ein Rühren, bedingt durch die Rührströmung und deren Störung der Einwaage, üblicherweise nicht möglich, da es sonst zu Fehldosierungen bei der Zugabe kommen kann. Als Folge dessen muss das Rühren zumindest während der Dauer der Feindosierung, also der Endphase der Dosierung bis zum Erreichen der Soll-Gewichtszugabe, pausiert werden, was jedoch aus den vorstehend bereits genannten Gründen nachteilig ist und zwar insbesondere dann, wenn die Herstellung von zum Beispiel Wasserbasislacken in nur vergleichsweise kleinem Maßstab im Bereich von 1 bis 1000 kg innerhalb von Laboren wie Forschungs- und Entwicklungslaboren oder im Rahmen der Kleinchargenfertigung erfolgt.

Soll eine Unterbrechung der Dosierung während der Zugabe vermieden werden, müssen vorab relevante Verfahrensparameter während der Dauer der Dosierung unter Rühren für jedes konkrete Rezept einer bestimmten Zielformulierung u.a. unter Berücksichtigung der Anzahl der eingesetzten Komponenten, ihrer Menge und der Reihenfolge ihrer Zugabe bekannt sein und für jedes Rezept definiert werden, um während der Dosierung ein geeignetes Rühren und ausreichendes Strömungsbild zu gewährleisten. Ein solcher Verfahrensparameter ist beispielsweise die Höhe des Rührers innerhalb des Behälters, in den dosiert wird. Weitere besonders relevante Verfahrensparameter sind die Wahl der Drehzahl und/oder der Umfangsgeschwindigkeit des eingesetzten Rührwerks. Diese Parameter sind beispielsweise während der Dauer der Dosierung üblicherweise vom Füllstand und insbesondere von der Viskosität der Mischung innerhalb des Behälters abhängig, in den zwecks Herstellung der Zielformulierung dosiert wird.

Nachteilig an dieser Vorgehensweise ist jedoch zum einen, dass die relevanten Verfahrensparameter wie die vorgenannten Parameter Drehzahl und Umfangsgeschwindigkeit für jedes konkrete Rezept einer bestimmten Zielformulierung vorab bekannt und daher jeweils manuell experimentell bestimmt werden müssen, was einen hohen Zeit- und Arbeitsaufwand erfordert und zudem das erwünschte Streben nach einer Automatisierung der Prozesstechnik limitiert. Zum anderen sind Änderungen der Drehzahl und Umfangsgeschwindigkeiten während der Dauer der Dosierung nicht (mehr) möglich, so dass beispielsweise auf eine erforderliche Verringerung oder Erhöhung dieser Parameter nicht reagiert werden kann, wenn sich der jeweils vordefinierte Verfahrensparameter während der Fertigung als doch nicht geeignet erweist. Aufgrund von Schwankungen innerhalb von Rohstoffchargen oder Temperatureinflüssen (Sommer, Winterbetrieb) ist es in der Praxis aber häufig der Fall, solche Parameter während der Produktion anzupassen.

Es besteht daher Bedarf an einem Verfahren zur Herstellung einer Beschichtungsmittelzusammensetzung oder einer Vorstufe davon, welches mittels einer gravimetrischen Dosierung der zu ihrer Herstellung benötigten Komponenten erfolgen kann, jedoch gleichzeitig zu jedem Zeitpunkt der Herstellung eine ununterbrochene Durchmischung auch während der Dosierung der einzelnen Komponenten erlaubt und zudem auch während der Dauer der Dosierung eine ausreichende Flexibilität hinsichtlich von Änderungen der relevanten Rührparameter des zur Durchmischung eingesetzten Rührwerks gewährleistet, jeweils ohne dabei das Auftreten von Fehldosierungen zu riskieren. Zugleich soll das Verfahren auch unter Gesichtspunkten der Arbeitssicherheit die in der Industrie gestellten Anforderungen erfüllen.

WO 2013/098913 A1 offenbart ein Verfahren entsprechend dem Oberbegriff des Anspruchs 1.

## Aufgabe

Eine Aufgabe der vorliegenden Erfindung ist es daher, ein Verfahren zur Herstellung von Beschichtungsmittelzusammensetzungen oder Vorstufen davon zur Verfügung zu stellen, welches mittels einer gravimetrischen Dosierung der zu ihrer Herstellung benötigten Komponenten erfolgt und eine ununterbrochene Durchmischung der einzelnen Komponenten auch während der Dosierung erlaubt, ohne dabei irgendwelche Nachteile herkömmlicher Verfahren aufzuweisen, und insbesondere auch während der Dauer der Dosierung eine ausreichende Flexibilität hinsichtlich von Änderungen der relevanten Rührparameter des zur Durchmischung eingesetzten Rührwerks gewährleistet, ohne dabei das Auftreten von Fehldosierungen zu riskieren. Dabei soll zudem ein möglichst hoher Automatisierungsgrad bei der Herstellung erreicht werden. Insbesondere ist es eine Aufgabe der vorliegenden Erfindung, ein solches Verfahren bereitzustellen, welches die Herstellung von Wasserbasislacken ermöglicht und zwar im Besonderen innerhalb der großindustriellen Produktion.

## Lösung

Diese Aufgabe wird gelöst durch die in den Patentansprüchen beanspruchten Gegenstände sowie die in der nachfolgenden Beschreibung beschriebenen bevorzugten Ausführungsformen dieser Gegenstände.

Ein erster Gegenstand der vorliegenden Erfindung ist daher ein Verfahren zur Herstellung einer in der Automobilindustrie einsetzbaren Beschichtungsmittelzusammensetzung oder einer Vorstufe davon, wobei das Verfahren wenigstens den Schritt (1) umfasst, nämlich

(1) Einwiegen aller zur Herstellung der Beschichtungsmittelzusammensetzung oder der Vorstufe davon erforderlichen Komponenten unter Verwendung einer gravimetrischen Dosieranlage mittels wenigstens eines Dosierventils in einen für die Einwaage geeigneten Behälter, dadurch gekennzeichnet, dass die in den Behälter eingewogenen Komponenten während der Dauer der Durchführung von Schritt (1) mittels eines Rührwerks durchmischt werden und während der Durchführung von Schritt (1) eine kontinuierliche Anpassung der Drehzahl und/oder der Umfangsgeschwindigkeit des Rührwerks in Abhängigkeit von der durch die Durchmischung entstehenden Trombe innerhalb des Behälters erfolgt, wobei die Trombe optisch mittels einer Kamera erfasst wird.

Es wurde überraschend gefunden, dass das erfindungsgemäße Verfahren unter gravimetrischer Dosierung aller eingesetzten Komponenten erfolgen kann und dennoch zu jedem Zeitpunkt der Herstellung eine ununterbrochene Durchmischung der einzelnen Komponenten auch während der Dosierung erlaubt.

Es wurde ferner überraschend gefunden, dass mittels des erfindungsgemäßen Verfahrens auf potentiell auftretende Viskositätsänderungen und/oder Füllstandsänderungen bei der Dosierung durch die kontinuierliche Anpassung der Drehzahl und/oder der Umfangsgeschwindigkeit des Rührwerks innerhalb des Behälters reagiert werden kann, insbesondere wenn sowohl hydrophile als auch hydrophobe Komponenten eingesetzt werden wie beispielsweise bei der Herstellung von Wasserbasislacken. In Abhängigkeit vom jeweiligen Füllstand und der jeweiligen Viskosität der Mischung innerhalb des Behälters verändert sich bei konstanter Position des Rührkörpers des eingesetzten Rührwerks im Sinne der Höhe des Rührkörpers innerhalb des Behälters, gerechnet vom Boden des Behälters, das an der Flüssigkeitsoberfläche sichtbare Strömungsbild (Trombe) im Behälter. Es wurde überraschend gefunden, dass wiederum in Abhängigkeit von dieser Trombe eine kontinuierliche Anpassung der Drehzahl und/oder der Umfangsgeschwindigkeit des Rührwerks innerhalb des erfindungsgemäßen Verfahrens erfolgen kann, um die Aufrechterhaltung einer konstanten Trombe während der gesamten Dauer von Schritt (1) des Verfahrens zu gewährleisten. Der jeweilige Füllstand wird dabei durch die Menge und Anzahl der in den Behälter eingewogenen Komponenten vorgegeben. Das erfindungsgemäße Verfahren ermöglicht somit überraschend die Aufrechthaltung einer konstanten Trombe (Vortex) innerhalb des zur Herstellung eingesetzten Behälters, die für eine optimale Durchmischung aller Komponenten erforderlich ist, insbesondere ohne irgendeine Anpassung der Höhe des Rührkörpers des eingesetzten Rührwerks vornehmen zu müssen.

Weitere überraschende Vorteile dieser Verfahrensführung ergeben sich aufgrund kürzerer Zeitdauern, die für die Herstellung nunmehr möglich sind, da vor der Dosierung eine experimentelle Ermittlung und Definition der optimalen Drehzahl und/oder Umfangsgeschwindigkeit des Rührwerks nicht erforderlich ist. Neben den bereits vorstehend genannten qualitativen Vorteilen beim Herstellungsverfahren bzw. der hergestellten Zusammensetzung oder Vorstufe davon, ergibt sich hieraus zudem ein wirtschaftlicher Vorteil aufgrund der ökonomischeren Verfahrensführung.

Ferner ergeben sich zudem überraschenderweise Vorteile hinsichtlich einer Erhöhung der Arbeitssicherheit bei dem Herstellungsverfahren, da mittels des erfindungsgemäßen Verfahrens und insbesondere der kontinuierlichen Anpassung der Drehzahl und/oder der Umfangsgeschwindigkeit des Rührwerks innerhalb des Behälters ein sogenannter Durchtrittsbetrieb vermieden werden kann. Darunter versteht man bei einem Herstellverfahren mittels Durchmischen aller Komponenten in einem Behälter einen Zustand, bei welchem der Rührkörper vom zu rührenden Medium nicht vollständig benetzt ist und sich daher zumindest teilweise oberhalb des Füllstands des Behälters befindet. Hierdurch kann es speziell unter dem Gesichtspunkt des Betriebes in Ex-Zonen zu unterschiedlichen Gefährdungspotenzialen kommen. Exemplarisch zu nennen sind hierbei ein möglicher Bruch der Rührwelle durch Anregung von unzulässigen Schwingungen (mechanische Zündquelle), die nicht mehr gegebene elektrische Ableitung, unkontrolliertes Verspritzen gegebenenfalls unter ungewollter Benetzung von Zündquellen, ungewollte Zerstäubung brennbarer Flüssigkeiten und damit einhergehend, die verstärkte Ausbildung weiterer Ex-Zonenbereiche und der Möglichkeit der Bildung von Zündquellen. Da innerhalb der Durchführung von Schritt (1) des erfindungsgemäßen Verfahrens eine kontinuierliche Anpassung der Drehzahl und/oder der Umfangsgeschwindigkeit des Rührwerks innerhalb des Behälters erfolgt, kann dies mittels des erfindungsgemäßen Verfahrens verhindert werden.

**Ausführliche Beschreibung**

*Erfindungsgemäßes Verfahren*

Das erfindungsgemäße Verfahren ist ein Verfahren zur Herstellung einer in der Automobilindustrie einsetzbaren Beschichtungsmittelzusammensetzung oder einer Vorstufe davon. Dabei sind sowohl Beschichtungsmittelzusammensetzungen herstellbar, die im Rahmen einer OEM-Serienlackierung als auch im Rahmen einer Reparaturlackierung eingesetzt werden können. Gleiches gilt für entsprechende Vorstufen.

Vorzugsweise wird das erfindungsgemäße Verfahren bei der großtechnischen Produktion oder Kleinchargenfertigung von in der Automobilindustrie einsetzbaren Beschichtungsmittelzusammensetzungen oder Vorstufen davon eingesetzt, da hier eine kontinuierliche Anpassung der Drehzahl und/oder Umfanggeschwindigkeit des Rührwerks innerhalb des Behälters in Abhängigkeit von der Trombe besonders wünschenswert ist. Grundsätzlich ist jedoch auch der Einsatz des erfindungsgemäßen Verfahrens innerhalb von Laboren wie Forschungs- und Entwicklungslaboren möglich.

In der Automobilindustrie einsetzbare Beschichtungsmittelzusammensetzungen sind beispielsweise Elektrotauchlacke, Primer, Füller, Basislacke, insbesondere Wasserbasislacke, Decklacke einschließlich von Klarlacken, insbesondere lösemittelbasierten Klarlacken. Die Herstellung von Wasserbasislacken ist besonders bevorzugt.

Der Begriff des Basislacks ist dem Fachmann bekannt und beispielsweise definiert im Römpp Lexikon, Lacke und Druckfarben, Georg Thieme Verlag, 1998, 10. Auflage, Seite 57. Unter einem Basislack ist demzufolge insbesondere ein in der Automobillackierung und allgemeinen Industrielackierung eingesetzter farbgebender und/oder farbgebender und einen optischen Effekt gebender Zwischenbeschichtungsstoff zu verstehen. Dieser wird im Allgemeinen auf einem mit Füller oder Primer vorbehandelten Metall- oder Kunststoffuntergrund, mitunter auch direkt auf dem Kunststoffuntergrund aufgebracht. Auch Altlackierungen, welche gegebenenfalls noch vorbehandelt werden müssen (beispielsweise durch Anschleifen), können als Untergründe dienen. Mittlerweile ist es durchaus üblich, mehr als eine Basislackschicht aufzutragen. Dementsprechend stellt in einem solchen Fall eine erste Basislackschicht den Untergrund für eine zweite dar. Um eine Basislackschicht insbesondere gegen Umwelteinflüsse zu schützen, wird auf dieser mindestens noch eine zusätzliche Klarlackschicht appliziert. Ein Wasserbasislack ist ein wässriger Basislack, in dem der Anteil an Wasser > als der Anteil an organischen Lösemitteln ist, bezogen auf das Gesamtgewicht an Wasser und organischen Lösemitteln in Gew.-% innerhalb des Wasserbasislacks.

Eine Vorstufe einer in der Automobilindustrie einsetzbaren Beschichtungsmittelzusammensetzung ist vorzugsweise eine Pigment- und/oder Füllstoffpaste. Der Begriff der Pigmentpaste beinhaltet dabei Farbpigmentpasten und Effektpigmentpasten. Vorstufen umfassen zudem (temporäre) Halbfabrikate, die zur Herstellung solcher Beschichtungsmittelzusammensetzungen eingesetzt werden können, insbesondere von Basislacken wie Wasserbasislacken, wie beispielsweise Bindemittel- und/oder Additiv-Mischungen. Der Begriff der Pigmentpaste ist dem Fachmann bekannt und beispielsweise definiert im Römpp Lexikon, Lacke und Druckfarben, Georg Thieme Verlag, 1998, 10. Auflage, Seite 452: Pigmentpasten sind Zubereitungen von Pigmentmischungen in Trägermaterialien wie Polymerisaten, in denen die Pigmente in einer höheren Konzentration vorliegen als es der späteren Anwendung entspricht. Die spätere Anwendung von Pigmentpasten liegt in der Regel in der Herstellung von Beschichtungsmittelzusammensetzungen wie Basislacken. Eine Pigmentpaste ist somit von einer Beschichtungsmittelzusammensetzung wie einem Basislack dahingehend zu unterscheiden, dass sie lediglich eine Vorstufe zur Herstellung einer solchen Beschichtungsmittelzusammensetzung darstellt. Eine Pigmentpaste als solche kann daher selbst nicht als Basislack eingesetzt werden. In Pigmentpasten ist üblicherweise das relative Gewichtsverhältnis von Pigmenten zu Polymerisaten größer als in den Beschichtungsmitteln, zu deren Herstellung die Paste schließlich eingesetzt wird. Neben den Trägermaterialien wie Polymerisaten, die auch Pastenbindemittel genannt werden, und Pigmenten sind in der Pigmentpaste üblicherweise auch Wasser und/oder organische Lösemittel vorhanden. Auch unterschiedliche Additive wie Netzmittel und/oder Verdicker können in einer Pigmentpaste eingesetzt werden. Eine Effektpigmentpaste stellt eine Pigmentpaste dar, die wenigstens ein Effektpigment als Pigment enthält. Ein Fachmann ist mit dem Begriff der Effektpigmente vertraut. Eine entsprechende Definition findet sich beispielsweise im Römpp Lexikon, Lacke und Druckfarben, Georg Thieme Verlag, 1998, 10. Auflage, Seiten 176 und 471. Eine Definition von Pigmentgen im Allgemeinen und weitere Spezifizierungen davon sind in der DIN 55943 (Datum: Oktober 2001) geregelt. Vorzugsweise handelt es sich bei Effektpigmenten um solche Pigmente, die optisch effektgebend oder farb- und optisch effektgebend, insbesondere optisch effektgebend, sind. Die Begriffe "optisch effektgebendes und farbgebendes Pigment", "optisch effektgebendes Pigment" und "Effektpigment" sind daher vorzugsweise austauschbar.

Das erfindungsgemäße Verfahren ist ein Verfahren zur Herstellung einer in der Automobilindustrie einsetzbaren Beschichtungsmittelzusammensetzung oder einer Vorstufe davon. Es umfasst wenigstens den Schritt (1), kann jedoch noch weitere optionale Schritte enthalten.

*Schritt (1) des erfindungsgemäßen Verfahrens*

Schritt (1) sieht ein Einwiegen aller zur Herstellung der Beschichtungsmittelzusammensetzung oder der Vorstufe davon erforderlichen Komponenten unter Verwendung einer gravimetrischen Dosieranlage mittels wenigstens eines Dosierventils in einen für die Einwaage geeigneten Behälter vor, wobei die in den Behälter eingewogenen Komponenten während der Dauer der Durchführung von Schritt (1) mittels eines Rührwerks durchmischt werden und während der Durchführung von Schritt (1) eine kontinuierliche Anpassung der Drehzahl und/oder der Umfangsgeschwindigkeit des Rührwerks in Abhängigkeit von der durch die Durchmischung entstehenden Trombe innerhalb des Behälters erfolgt, wobei die Trombe optisch mittels einer Kamera erfasst wird.

Als entsprechende Komponenten werden vorzugsweise Lösungen oder Dispersionen eingesetzt.

Die Einwaage gemäß Schritt (1) des erfindungsgemäßen Verfahrens stellt eine Dosierung dar. Diese wird gemäß Schritt (1) unter Verwendung einer gravimetrischen Dosieranlage durchgeführt. Vorzugsweise erfolgt das gesamte erfindungsgemäße Verfahren mittels einer gravimetrischen Dosieranlage.

Die Drehzahl kann vorzugsweise über die Gleichung $v = \pi \cdot d \cdot n$ in die Umfangsgeschwindigkeit v umgerechnet werden, wobei d dem Durchmesser des Rührkörpers des Rührwerks und n der Drehzahl des Rührwerks entsprechen. Umgekehrt kann entsprechend die Umfangsgeschwindigkeit v in die Drehzahl n umgerechnet werden.

Innerhalb von Schritt (1) des erfindungsgemäßen Verfahrens wird die innerhalb des Behälters entstehende Trombe optisch mittels einer Kamera, vorzugsweise mittels einer Digitalkamera erfasst. Vorzugsweise werden durch die optische Erfassung der Trombe optische Daten generiert, die digital auswertbar sind. Vorzugsweise erfolgt die optische Erfassung der Trombe regelmäßig während der gesamten Dauer der Durchführung von Schritt (1). Vorzugsweise werden dabei mittels einer Kamera Bilder der Trombe aufgenommen, vorzugsweise 50 Bilder/Sekunde bis 500 Bilder/Sekunde.

Mittels der Kamera werden dabei vorzugsweise Bilder der Trombe aufgenommen und vorzugsweise gespeichert und in eine Datenbank wie eine elektronische Datenbank, zum Beispiel eine Online-Datenbank, inkorporiert.

Der Begriff der Trombe (auch genannt Vortex) ist dem Fachmann auf dem Gebiet der Rühr- und Mischtechnik bekannt. Darunter versteht man das durch ein Rührwerk erzeugte Strömungsbild an der Oberflläche der durchmischten Mischung wie an einer entsprechenden Flüssigkeitsoberfläche. Die Trombe ist abhängig vom jeweiligen Füllstand und der jeweiligen Viskosität der Mischung innerhalb des Behälters. Um eine gute Durchmischung während der gesamten Dauer der Dosierung zu gewährleisten, ist auch bei sich änderndem Füllstand und/oder sich ändernder Viskosität die Aufrechterhaltung einer konstanten Trombe erforderlich bzw. wünschenswert.

Die kontinuierliche Anpassung der Drehzahl und/oder der Umfangsgeschwindigkeit des Rührwerks erfolgt innerhalb von Schritt (1) des erfindungsgemäßen Verfahrens in Abhängigkeit von der durch die Durchmischung entstehenden Trombe innerhalb des Behälters durch optische Erfassung der Trombe mittels einer Kamera und vorzugsweise digitaler Auswertung der so erhaltenen optischen Daten. Die digitale Auswertung beinhaltet dabei vorzugsweise einen Vergleich der erhaltenen optischen Daten der Trombe mit in einer Datenbank enthaltenen optischen Vergleichsdaten.

Dabei erfolgt vorzugsweise ein Vergleich der aufgenommenen Bilder der Rührtrombe mit in der Datenbank enthaltenen Vergleichsbildern von Rührtromben, die vorzugsweise in Bezug auf den jeweiligen Füllstand des Behälters und der jeweiligen Viskosität der im Behälter befindlichen Mischung eine optimale Trombe darstellen. Durch den erfolgten Vergleich wird dann die während der Durchführung von Schritt (1) des erfindungsgemäßen Verfahrens innerhalb des Behälters existierende Trombe hinsichtlich der Durchmischung der im Behälter vorliegenden Komponenten optimiert, was durch die kontinuierliche Anpassung der Drehzahl und/oder der Umfangsgeschwindigkeit des Rührwerks in Abhängigkeit von dem optischen Bild der Trombe innerhalb des Behälters erfolgt. Die in der Datenbank enthaltenen Vergleichsbilder von Tromben, die vorzugsweise in Bezug auf die jeweiligen Bedingungen innerhalb des Behältes wie insbesondere Füllstand und/oder Viskosität eine optimale Trombe darstellen, sind daher vorzugsweise innerhalb der Datenbank mit Informationen hinsichtlich der für eine optimale Durchmischung erforderlichen Drehzahlen und/oder Umfangsgeschwindigkeit des eingesetzten Rührwerks verknüpft. Darauf basierend kann dann ein Abgleich erfolgen und so die Drehzahl und/oder die Umfangsgeschwindigkeit des Rührwerks kontinuierlich automatisch angepasst werden.

Die kontinuierliche Anpassung der Drehzahl und/oder der Umfangsgeschwindigkeit des Rührwerks in Abhängigkeit von der Trombe innerhalb des Behälters stellt vorzugsweise eine Verringerung oder Erhöhung der jeweils aktuellen Drehzahl und/oder der Umfangsgeschwindigkeit dar, vorzugsweise bis zum Erreichen der jeweiligen Zieltrpmbe gemäß entsprechender Trombenreferenzbildern aus Datenbanken (Solltromben-Bilder).

Vorzugsweise wird während der Durchführung von Schritt (1) unabhängig vom Füllstand innerhalb des Behälters und/oder der Viskosität der sich in dem Behälter befindlichen Mischung eine konstante Trombe innerhalb des Behälters aufrechterhalten.

Vorzugsweise erfolgt die kontinuierliche Anpassung der Drehzahl und/oder der Umfangsgeschwindigkeit des Rührwerks automatisiert. Vorzugsweise erfolgt die Automatisierung mittels Unterstützung einer Software.

Vorzugsweise erfolgt die Durchführung des Schrittes (1) mittels Unterstützung einer Software. Dadurch wird eine Automatisierung von Schritt (1) des erfindungsgemäßen Verfahrens erreicht.

Die in den Behälter eingewogenen Komponenten werden zu jedem Zeitpunkt während der Dauer der Durchführung von Schritt (1) mittels eines Rührwerks vermischt. Vorzugsweise ist das Rührwerk durch einen Motor wie einen elektrischen Motor ansteuerbar, bedienbar und/oder betreibbar. Vorzugsweise umfasst das Rührwerk eine Rührwelle, an die wenigstens ein Rührkörper angebracht ist. Jede Art von Rührkörpern können eingesetzt werden. Vorzugsweise sind die Rührkörper ausgewählt aus der Gruppe bestehend aus Propellern, Schrägblättern, Scheiben, Taumelscheiben, Hollowblades, Impellern, Kreuzbalken, Ankern, Blättern, Gittern und Zahnscheiben sowie Lenartscheiben. Der oder die Rührkörper können dabei an eine Rührwelle angebracht sein. Das Rührwerk ist vorzugsweise zu einer Höchstdrehzahl bis 1500 min$^{-1}$ befähigt. Das Rührwerk ist vorzugsweise höhenverstellbar, insbesondere ist die Rührwelle als Teil des Rührwerks höhenverstellbar, um eine kontinuierliche Anpassung der Drehzahl und/oder der Umfangsgeschwindigkeit des Rührwerks in Abhängigkeit vom jeweiligen Füllstand innerhalb des Behälters zu ermöglichen. Dies ist jedoch nicht zwingend erforderlich, da eine kontinuierliche Anpassung der Drehzahl und/oder der Umfangsgeschwindigkeit des Rührwerks in Abhängigkeit von der Trombe für die Durchführung von Schritt (1) des erfindungsgemäßen Verfahrens bereits ausreichend ist.

Vorzugsweise ist der Rührkörper des eingesetzten Rührwerks über die gesamte Dauer der Durchführung von Schritt (1) so positioniert, dass eine optimale Trombe und/oder eine optimale Durchmischung gewährleisten werden Unabhängig davon muss sich der Rührkörper aber vorzugsweise wenigstens relativ zu einem bestimmten Wert (prozentual oder absolut) zum Unterspiegel $U_s$ befinden.

Zwischen dem Füllstand $F_s$ innerhalb des Behälters, gemessen in [mm] vom Boden des Behälters, und der Höhe $R_h$ des Rührköpers innerhalb des Behälters, gemessen vom Boden des Behälters in [mm], besteht folgender Zusammenhang:

$$R_h = F_s \cdot X$$

X bezeichnet dabei eine Prozentangabe, die angibt, zu welchem prozentualen Anteil sich der Rührkörper unterhalb des Füllstands $F_s$ befindet.

Um eine Durchmischung mittels des Rührköpers zu ermöglichen, muss dieser einen bestimmten Mindestabstand zum Boden des Behälters aufweisen, um ein Rühren zu ermöglichen. $R_{h,min}$ bezeichnet dabei den tiefstmöglichen Abstand des Rührkörpers während der Durchmischung zum Behälterboden.

Bei Kenntnis des Füllstands $F_s$ innerhalb des Behälters und der Höhe $R_h$ des Rührköpers innerhalb des Behälters, gemessen vom Boden des Behälters in [mm], kann der sogenannte Unterspiegel $U_s$ gemäß folgender Gleichung berechnet werden:

$$U_s = F_s - R_h$$

Der Unterspiegel $U_s$ stellt dabei den Abstand des Füllstands $F_s$ von der Höhe $R_h$ des Rührkörpers dar.

Unter Berücksichtigung von $R_h = F_s \cdot X$ kann der Unterspiegel $U_s$ somit gemäß folgender Gleichung bestimmt werden:

$$U_s = F_s - R_h = F_s - (F_s \cdot X)$$

X, also der prozentuale Anteil, innerhalb dessen sich der Rührkörper unterhalb des Füllstands $F_s$ befindet, kann dann zu

$$X = 1 - U_s/F_s$$

berechnet werden.

Mittels bestimmter relativer Vorgaben für den Wert X gemäß der Formel $X = 1 - U_s/F_s$ oder für den Unterspiegel $U_s$ kann so die Höhe $R_h$ des Rührköpers innerhalb des Behälters während der Durchführung von Schritt (1) gesteuert werden. Beispielsweise ist es möglich, zunächst bei Beginn einer Dosierung einen Unterspiegel $U_s = 0$ mm zu wählen und im Zuge einer automatisierten Durchführung des Schrittes (1) erst ab Erreichen eines Unterspiegels von $U_s \neq 0$ wie beispielsweise $U_s = 30$ mm eine Anpassung von $R_h$ an den Füllstand $F_s$ vorzunehmen.

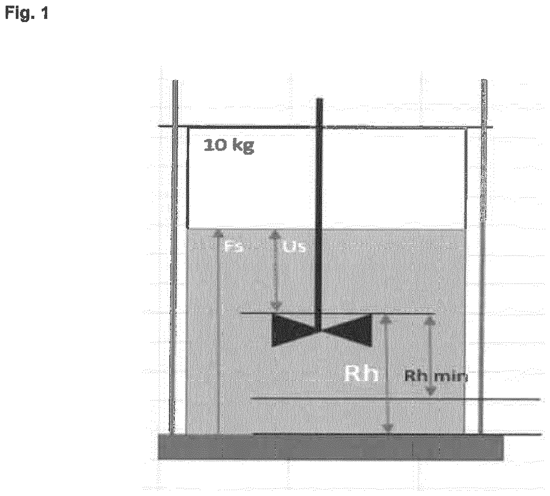

Die vorgenannten Zusammenhänge sind in **Fig. 1** veranschaulicht.

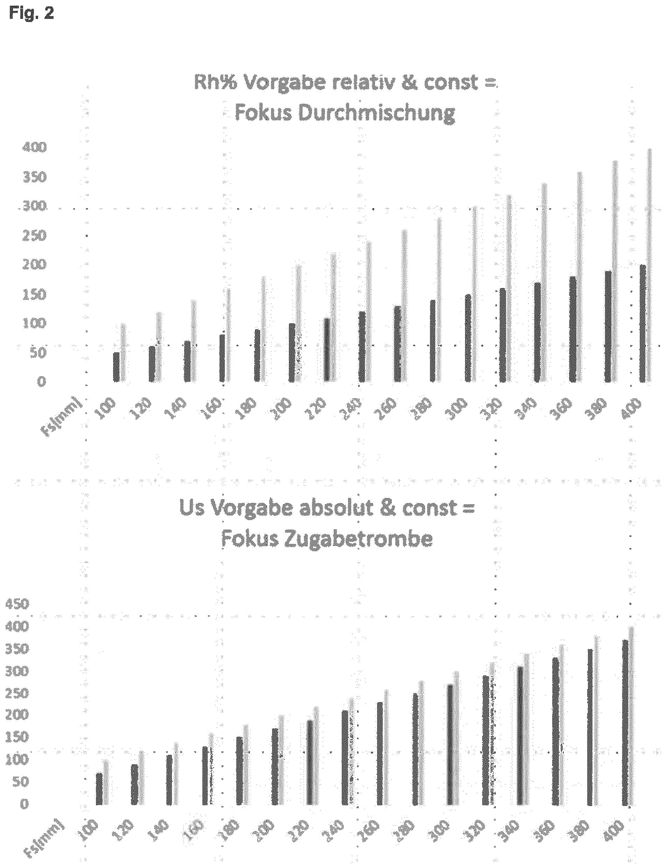

Aus der unteren Abbildung innerhalb von **Fig. 2** ist beispielhaft ersichtlich, dass sich die Höhe des Rührkörpers ($R_h$) für eine optimale Dosier-Rührtrombe (Zugabetrombe) (in **Fig. 2** jeweils der kürzere Balken links) möglichst nah am Flüssigkeitsspiegel $F_s$ (in **Fig. 2** jeweils der längere Balken rechts) befinden sollte, aber aus Gründen der Arbeitssicherheit (Durchtrittsbetrieb) immer eine bestimmte Überdenkung (Unterspiegelwert $U_s$) vorweisen muss ($U_s = F_s - R_h$). Dem gegenüber steht eine optimale Position im Bereich von ca. 50% vom Flüssigkeitsspiegel $F_s$, um eine optimale Durchmischung zu gewährleisten, was aus der oberen Abbildung innerhalb von **Fig. 2** beispielhaft ersichtlich ist.

Insbesondere ist der Rührkörper über die gesamte Dauer der Durchführung von Schritt (1) vollständig unterhalb des Füllstands positioniert (Plausibilitätsprüfung: X muss immer <100% sein). Dadurch kann ein Durchtrittsbetrieb verhindert werden. Vorzugsweise wird dies innerhalb von Schritt (1) kontrolliert, insbesondere wenn die Durchführung des Schrittes (1) automatisiert wie zum Beispiel mittels Unterstützung einer Software erfolgt, so dass die Durchführung von Schritt (1) erst beginnen kann oder fortgeführt werden kann, wenn der Rührkörper sich unterhalb des aktuellen Füllstands befindet.

Vorzugsweise wird das Gewicht des eingesetzten Behälters und darin bereits eingewogener Komponenten während der Durchführung von Schritt (1) bestimmt. Das Gewicht des eingesetzten vorzugsweise leeren Behälters vor der Durchführung von Schritt (1) ist vorzugsweise bekannt. Das Gewicht des eingesetzten Behälters und darin bereits eingewogener Komponenten, d.h. im Falle eines vor Durchführung von Schritt (1) leeren Behälters die Summe aus Leergewicht des Behälters und aus darin bereits eingewogenen Komponenten, wird vorzugsweise zu jedem Zeitpunkt der Durchführung von Schritt (1) bestimmt. Vorzugsweise weist der eingesetzte Behälter vor Durchführung von Schritt (1) ein ermitteltes und daher bekanntes Leergewicht auf. Das Gewicht des Behälters kann dabei mittels einer Waage wie einer elektrischen Waage noch vor Durchführung des Schrittes (1) ermittelt oder noch vor Beginn der Einwaage gemäß Schritt (1) mittels der eingesetzten gravimetrischen Dosieranlage bestimmt werden. Ist der Behälter vor Durchführung des Schrittes (1) leer, was vorzugsweise der Fall ist, so entspricht das so ermittelte bzw. bestimmte Gewicht dem Leergewicht des Behälters. Das Volumen des Innenraums des erfindungsgemäß eingesetzten Behälters ist vorzugsweise ebenfalls bekannt. In diesem Fall stellt das Volumen des Innenraums des Behälters ein vordefiniertes Volumen dar, welches auf Grundlage der Geometrie des Innenraums des Behälters (z.B. Breite, Höhe, Länge, Radius und/oder Durchmesser) berechenbar und daher bekannt ist.

Vorzugsweise weist der erfindungsgemäß eingesetzte Behälter auf seiner Außenseite ein elektronisch lesbares Etikett wie einen Barcode auf, der gescannt werden kann. Das Etikett enthält vorzugsweise wenigstens Informationen zum Leergewicht des Behälters und/oder zur Geometrie des Innenraums des eingesetzten Behälters und/oder des Volumens des Innenraums. In diesem Fall kann das erfindungsgemäße Verfahren einen weiteren optionalen Schritt (0) umfassen, der ein elektronisches Lesen des Etiketts des Behälters beinhaltet. Die Durchführung von Schritt (1) des erfindungsgemäßen Verfahrens kann dann auf Grundlage dieser elektronisch gelesenen Information(en) erfolgen, insbesondere wenn die Durchführung des Schrittes (1) mittels Unterstützung einer Software erfolgt, insbesondere die kontinuierliche Anpassung der Drehzahl und/oder der Umfangsgeschwindigkeit des Rührwerks in Abhängigkeit von der Trombe innerhalb des Behälters, um eine automatisierte Durchführung zu ermöglichen.

Vorzugsweise erfolgt die Durchführung des Schrittes (1) mittels Unterstützung einer Software, insbesondere die kontinuierliche Anpassung der Drehzahl und/oder der Umfangsgeschwindigkeit des Rührwerks in Abhängigkeit von der Trombe innerhalb des Behälters.

Vorzugsweise erfolgt die Durchführung von Schritt (1) automatisiert.

Vorzugsweise erfolgt die Einwaage gemäß Schritt (1) auf Grundlage eines elektronisch innerhalb einer Datenbank erstellten oder aus einer bestehenden Datenbank, vorzugsweise Online-Dartenbank, abgerufenen Rezeptes einer Zielformulierung, welche der herzustellenden Beschichtungsmittelzusammensetzung oder der Vorstufe davon entspricht. Das Rezept der Zielformulierung umfasst insbesondere die Art, Anzahl und Menge der Komponenten, die zur Herstellung der Zielformulierung erforderlich sind, sowie die Reihenfolge ihrer Zugabe.

Das Rezept der Zielformulierung kann weitere Informationen bezüglich der Herstellung der Zielformulierung enthalten, zum Beispiel allgemeingültige und produktionsgerechte und praxisgerechte Kennzahlen.

Vorzugsweise enthält das elektronisch lesbare Etikett wie der Barcode, der auf die Außenseite des Behälters aufgebracht werden und gescannt werden kann, zudem das Rezept der Zielformulierung.

## Beispiele und Vergleichsbeispiele

Das nachfolgende Beispiel dient der Erläuterung der Erfindung, ist jedoch nicht einschränkend auszulegen. Insbesondere wird erläutert, wie eine kontinuierliche Anpassung der Position des Rührkörpers an den jeweiligen Füllstand innerhalb des Behälters erfolgen kann.

Bei konstanter horizontaler Position des Rührkörpers in der Flüssigkeitssäule im Behälter (Rührerhöhe $R_h$ = konstant) soll auf Änderungen der Viskosität und/oder der Zunahme des Füllstandes automatisch reagiert werden. Eine Zunahme des Füllstandes führt bei konstanter oder ebenfalls zunehmender Viskosität bei konstanter Drehzahl bzw. Umfangsgeschwindigkeit ab einem bestimmten Punkt zum Zusammenbruch der Trombe, d.h. an der Oberfläche liegt kein Strudel (Vortex) mehr vor. Kritische Zugaben (z.B. von hydrophiler vs. hydrophober Komponenten) würden in eine nahezu unbewegte Oberflächenströmung erfolgen. Dies kann mittels des erfindungsgemäßen Verfahrens verhindert werden, da ein Bild der Trombe kontinuierlich aufgenommen und verarbeitet wird. Wird die Trombe schwächer, ist dies an der Abnahme der Donut-Form ersichtlich. Das bei einer optimalen oder zumindest ausreichenden Trombe in der Mitte der Donut-Form sichtbare Rührkörperzentrum wird von der Flüssigkeit bedeckt. Anhand einer Datenbank und der hinterlegten Steuerungslogik kann die Drehzahl entsprechend erhöht werden, bis die Donut-Form wieder möglichst optimal ausgeprägt ist. Falls die Trombe zu stark ausgeprägt ist (z.B. durch zu starke Viskositätsabsenkung und/oder zu hoher Drehzahl), also die Form des Donuts zu extrem ausgeprägt ist und eine zu große Fläche des Rührkörpers sichtbar wird, erfolgt die Reduktion der Drehzahl. Insofern wird mittels des Kamerasignals und dessen Erfassung, Auswertung und Nutzung zwecks automatisierter Anpassung der Drehzahl auch der Durchtrittsbetrieb verhindert. In gleicher Weise kann grundsätzlich zusätzlich die Rührerhöhe anhand des Signals entsprechend automatisch angepasst werden.

**Patentansprüche**

1. Ein Verfahren zur Herstellung einer in der Automobilindustrie einsetzbaren Beschichtungsmittelzusammensetzung oder einer Vorstufe davon, wobei das Verfahren wenigstens den Schritt 1 umfasst, nämlich

    1 Einwiegen aller zur Herstellung der Beschichtungsmittelzusammensetzung oder der Vorstufe davon erforderlichen Komponenten unter Verwendung einer gravimetrischen Dosieranlage mittels wenigstens eines Dosierventils in einen für die Einwaage geeigneten Behälter, **dadurch gekennzeichnet, dass** die in den Behälter eingewogenen Komponenten zu jedem Zeitpunkt während der Dauer der Durchführung von Schritt 1 mittels eines Rührwerks durchmischt werden und während der Durchführung von Schritt 1 eine kontinuierliche Anpassung der Drehzahl und/oder der Umfangsgeschwindigkeit des Rührwerks in Abhängigkeit von der durch die Durchmischung entstehenden Trombe innerhalb des Behälters erfolgt, wobei die Trombe optisch mittels einer Kamera erfasst wird.

2. Das Verfahren gemäß Anspruch 1, **dadurch gekennzeichnet, dass** die Drehzahl über die Gleichung v = π·d·n in die Umfangsgeschwindigkeit v und umgekehrt umgerechnet werden kann, wobei d dem Durchmesser des Rührkörpers des Rührwerks und n der Drehzahl des Rührwerks entsprechen.

3. Das Verfahren gemäß einem der vorstehenden Ansprüche, **dadurch gekennzeichnet, dass** die kontinuierliche Anpassung der Drehzahl und/oder der Umfangsgeschwindigkeit des Rührwerks in Abhängigkeit von der durch die Durchmischung entstehenden Trombe innerhalb des Behälters durch optische Erfassung der Trombe mittels einer Kamera und digitaler Auswertung der so erhaltenen optischen Daten erfolgt.

4. Das Verfahren Anspruch 3, **dadurch gekennzeichnet, dass** die digitale Auswertung einen Vergleich der erhaltenen optischen Daten der Trombe mit in einer Datenbank enthaltenen optischen Vergleichsdaten beinhaltet.

5. Das Verfahren gemäß einem der vorstehenden Ansprüche, **dadurch gekennzeichnet, dass** die kontinuierliche Anpassung der Drehzahl und/oder der Umfangsgeschwindigkeit des Rührwerks in Abhängigkeit von der Trombe innerhalb des Behälters eine Verringerung oder Erhöhung der jeweils aktuellen Drehzahl und/oder der Umfangsgeschwindigkeit darstellt.

6. Das Verfahren gemäß einem der vorstehenden Ansprüche, **dadurch gekennzeichnet, dass** die kontinuierliche Anpassung der Drehzahl und/oder der Umfangsgeschwindigkeit des Rührwerks automatisiert erfolgt.

7. Das Verfahren gemäß Anspruch 6, **dadurch gekennzeichnet, dass** die Automatisierung mittels Unterstützung einer Software erfolgt.

8. Das Verfahren gemäß einem der vorstehenden Ansprüche, **dadurch gekennzeichnet, dass** Schritt 1 bei konstanter Position des wenigstens einen Rührkörpers des Rührwerks innerhalb des Behälters durchgeführt wird, wobei die Position des wenigstens einen Rührkörpers der Höhe des Rührkörpers innerhalb des Behälters, gerechnet vom Boden des Behälters, entspricht.

9. Das Verfahren gemäß einem der vorstehenden Ansprüche, **dadurch gekennzeichnet, dass** während der Durchführung von Schritt 1 unabhängig vom Füllstand innerhalb des Behälters und/oder der Viskosität der sich in dem Behälter befindlichen Mischung eine konstante Trombe innerhalb des Behälters aufrechterhalten wird.

10. Das Verfahren gemäß einem der vorstehenden Ansprüche, **dadurch gekennzeichnet, dass** das Rührwerk durch einen Motor ansteuerbar ist.

11. Das Verfahren gemäß einem der vorstehenden Ansprüche, **dadurch gekennzeichnet, dass** das Rührwerk eine Rührwelle umfasst, an die wenigstens ein Rührkörper angebracht ist.

12. Das Verfahren gemäß Anspruch 11, **dadurch gekennzeichnet, dass** der Rührkörper während der Dauer der Durchführung von Schritt 1 vollständig unterhalb des jeweiligen Füllstands innerhalb des Behälters positioniert ist.

13. Das Verfahren gemäß einem der vorstehenden Ansprüche, **dadurch gekennzeichnet, dass** die Einwaage gemäß Schritt 1 auf Grundlage eines elektronisch innerhalb einer Datenbank erstellten oder aus einer bestehenden Datenbank abgerufenen Rezeptes einer Zielformulierung erfolgt, welche der herzustellenden Beschichtungsmittelzusammensetzung oder der Vorstufe davon entspricht.

14. Das Verfahren gemäß einem der vorstehenden Ansprüche, **dadurch gekennzeichnet, dass** der Behälter auf seiner Außenseite ein elektronisch lesbares Etikett aufweist, welches Informationen zum Leergewicht des Behälters und/oder zur Geometrie des Innenraums des eingesetzten Behälters und/oder des Volumens des Innenraums des eingesetzten Behälters enthält.

15. Das Verfahren gemäß einem der vorstehenden Ansprüche, **dadurch gekennzeichnet, dass** das Verfahren ein Verfahren zur Herstellung eines Wasserbasislacks ist.

**Claims**

1. Method for preparing a coating material composition or a precursor thereof that can be used in the automobile industry, the method comprising at least step 1, that is

    1 weighing out all the components required for preparing the coating material composition or the precursor thereof into a container suitable for weighing them out by means of at least one metering valve when using a gravimetric metering system,
    **characterized in that** the components that are weighed out into the container are mixed by means of a stirring mechanism at all times throughout the course of carrying out step 1 and a continuous adaptation of the rotational speed and/or circumferential speed of the stirring mechanism in dependence on the vortex produced by the mixing within the container takes place throughout the course of carrying out step 1, the vortex being optically detected by means of a camera.

2. Method according to Claim 1, **characterized in that** the rotational speed can be converted into the circumferential speed v, and vice versa, by way of the equation v = n.d.n, where d corresponds to the diameter of the stirring body of the stirring mechanism and n corresponds to the rotational speed of the stirring mechanism.

3. Method according to one of the preceding claims, **characterized in that** the continuous adaptation of the rotational speed and/or the circumferential speed of the stirring mechanism is performed in dependence on the vortex within the container produced by the mixing by optical detection of the vortex by means of a camera and digital evaluation of the optical data thus obtained.

4. Method according to Claim 3, **characterized in that** the digital evaluation comprises a comparison of the optical data obtained of the vortex with optical comparison data contained in a database.

5. Method according to one of the preceding claims, **characterized in that** the continuous adaptation of the rotational speed and/or the circumferential speed of the stirring mechanism in dependence on the vortex within the container represents a reduction or increase in the respectively current rotational speed and/or circumferential speed.

6. Method according to one of the preceding claims, **characterized in that** the continuous adaptation of the rotational speed and/or the circumferential speed of the stirring mechanism is performed in an automated manner.

7. Method according to Claim 6, **characterized in that** the automation is performed by means of software support.

8. Method according to one of the preceding claims, **characterized in that** step 1 is carried out with a constant position of the at least one stirring body of the stirring mechanism within the container, the position of the at least one stirring body corresponding to the height of the stirring body within the container, calculated from the bottom of the container.

**9.** Method according to one of the preceding claims, **characterized in that** a constant vortex within the container is maintained while carrying out step 1 independently of the filling level within the container and/or the viscosity of the mixture located in the container.

**10.** Method according to one of the preceding claims, **characterized in that** the stirring mechanism can be activated by a motor.

**11.** Method according to one of the preceding claims, **characterized in that** the stirring mechanism comprises a stirring shaft, to which at least one stirring body is attached.

**12.** Method according to Claim 11, **characterized in that** the stirring body is positioned completely below the respective filling level within the container throughout the course of carrying out step 1.

**13.** Method according to one of the preceding claims, **characterized in that** the weighing out according to step 1 is performed on the basis of a formula of a target formulation, which is created electronically within a database or retrieved from an existing database and corresponds to the coating material composition or the precursor thereof that is to be prepared.

**14.** Method according to one of the preceding claims, **characterized in that** the container has on its outer side an electronically readable label, which contains items of information concerning the empty weight of the container and/or concerning the geometry of the interior space of the container used and/or the volume of the interior space of the container used.

**15.** Method according to one of the preceding claims, **characterized in that** the method is a method for preparing a water-based paint.

**Revendications**

**1.** Procédé de production d'une composition d'agent de revêtement, utilisable dans l'industrie automobile, ou d'un précurseur de celle-ci, le procédé comprenant au moins l'étape 1, à savoir

1 peser tous les composants nécessaires à la production de la composition de revêtement ou au précurseur de celle-ci à l'aide d'un système de dosage gravimétrique au moyen d'au moins une soupape de dosage dans un récipient adapté à la pesée,
**caractérisé en ce que** les composants pesés dans le récipient sont mélangés au moyen d'un agitateur à tout moment au cours de l'étape 1 et, pendant l'étape 1, une adaptation de la vitesse de rotation et/ou de la vitesse périphérique de l'agitateur est effectuée en continu en fonction du vortex résultant du mélange à l'intérieur du récipient, le vortex étant détecté optiquement au moyen d'une caméra.

**2.** Procédé selon la revendication 1, **caractérisé en ce que** la vitesse de rotation peut être convertie en vitesse périphérique v et vice versa à l'aide de l'équation $v = \pi \cdot d \cdot n$, d correspondant au diamètre du corps d'agitation de l'agitateur et n correspondant à la vitesse de rotation de l'agitateur.

**3.** Procédé selon l'une des revendications précédentes, **caractérisé en ce que** l'adaptation en continu de la vitesse de rotation et/ou de la vitesse périphérique de l'agitateur en fonction du vortex résultant du mélange à l'intérieur du récipient est effectuée par détection optique du vortex au moyen d'une caméra et par une évaluation numérique des données optiques ainsi obtenues.

**4.** Procédé selon la revendication 3, **caractérisé en ce que** l'évaluation numérique comprend une comparaison des données optiques obtenues du vortex à des données de comparaison optique contenues dans une base de données.

**5.** Procédé selon l'une des revendications précédentes, **caractérisé en ce que** l'adaptation en continu de la vitesse de rotation et/ou de la vitesse périphérique de l'agitateur en fonction du vortex à l'intérieur du récipient représente une diminution ou une augmentation de la vitesse de rotation actuelle et/ou de la vitesse périphérique.

**6.** Procédé selon l'une des revendications précédentes, **caractérisé en ce que** l'adaptation en continu de la vitesse de rotation et/ou de la vitesse périphérique de l'agitateur est effectuée de manière automatisée.

**7.** Procédé selon la revendication 6, **caractérisé en ce que** l'automatisation est effectuée à l'aide d'un logiciel.

**8.** Procédé selon l'une des revendications précédentes, **caractérisé en ce que** l'étape 1 est réalisée à position constante de l'au moins un corps d'agitation de l'agitateur à l'intérieur du récipient, la position de l'au moins un corps d'agitation correspondant à la hauteur du corps d'agitation à l'intérieur du récipient, calculée à partir du fond du récipient.

**9.** Procédé selon l'une des revendications précédentes, **caractérisé en ce que**, au cours de l'étape 1, un vortex constant est maintenu à l'intérieur du récipient indépendamment du niveau de remplissage à l'intérieur du récipient et/ou de la viscosité du mélange se trouvant dans le récipient.

10. Procédé selon l'une des revendications précédentes, **caractérisé en ce que** l'agitateur peut être commandé par un moteur.

11. Procédé selon l'une des revendications précédentes, **caractérisé en ce que** l'agitateur comprend un arbre d'agitation auquel est fixé au moins un corps d'agitation.

12. Procédé selon la revendication 11, **caractérisé en ce que** le corps d'agitation est positionné entièrement au-dessous du niveau de remplissage respectif à l'intérieur du récipient pendant la durée de l'étape 1.

13. Procédé selon l'une des revendications précédentes, **caractérisé en ce que** la pesée selon l'étape 1 est effectuée à partir d'une recette d'une formulation cible qui est créée électroniquement à l'intérieur d'une base de données ou extraite d'une base de données existante et qui correspond à la composition de revêtement à produire ou au précurseur de celle-ci.

14. Procédé selon l'une des revendications précédentes, **caractérisé en ce que** le récipient comporte sur son côté extérieur une étiquette lisible électroniquement qui contient des informations relatives au poids à vide du récipient et/ou à la géométrie de l'espace intérieur du récipient utilisé et/ou au volume de l'espace intérieur du récipient utilisé.

15. Procédé selon l'une des revendications précédentes, **caractérisé en ce que** le procédé est un procédé de production d'une peinture à l'eau.

**Fig. 1**

**Fig. 2**

Rh% Vorgabe relativ & const =
Fokus Durchmischung

Us Vorgabe absolut & const =
Fokus Zugabetrombe

**IN DER BESCHREIBUNG AUFGEFÜHRTE DOKUMENTE**

**In der Beschreibung aufgeführte Patentdokumente**

- WO 2013098913 A1

**In der Beschreibung aufgeführte Nicht-Patentliteratur**

- **RÖMPP LEXIKON.** Lacke und Druckfarben. Georg Thieme Verlag, 1998, 57
- **RÖMPP LEXIKON.** Lacke und Druckfarben. Georg Thieme Verlag, 1998, 452
- **RÖMPP LEXIKON.** Lacke und Druckfarben. Georg Thieme Verlag, 1998, 176, , 471